(19) **Europäisches Patentamt / European Patent Office / Office européen des brevets**

(11) **EP 4 696 760 A1**

(12) **EUROPEAN PATENT APPLICATION**
published in accordance with Art. 153(4) EPC

(43) Date of publication:
**18.02.2026 Bulletin 2026/08**

(21) Application number: **23930873.7**

(22) Date of filing: **30.11.2023**

(51) International Patent Classification (IPC):
**C09K 5/14** $^{(2006.01)}$

(52) Cooperative Patent Classification (CPC):
**C08L 101/00; C09D 7/61; C09D 11/02; C09D 201/00; C09J 11/04; C09J 201/00; C09K 5/14**

(86) International application number:
**PCT/JP2023/042935**

(87) International publication number:
**WO 2024/202248 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.03.2023 JP 2023050358**

(71) Applicant: **Dainichiseika Color & Chemicals Mfg. Co., Ltd.**
**Chuo-ku**
**Tokyo 103-8383 (JP)**

(72) Inventors:
- **YAMANE, Kenichi**
  **Tokyo 103-8383 (JP)**
- **NAKAMURA, Yuusuke**
  **Tokyo 103-8383 (JP)**
- **ZHU, Zhigang**
  **Tokyo 103-8383 (JP)**
- **HONDA, Taihei**
  **Tokyo 103-8383 (JP)**

(74) Representative: **Vossius & Partner**
**Patentanwälte Rechtsanwälte mbB**
**Siebertstrasse 3**
**81675 München (DE)**

(54) **THERMALLY CONDUCTIVE PARTICLE AND METHOD FOR PRODUCING SAME, MIXTURE, ARTICLE, RESIN COMPOSITION AND THERMALLY CONDUCTIVE THIN FILM**

(57) Thermally conductive particles contain at least a fired product obtained by firing an aluminum raw material, a zinc raw material, and an additional raw material other than the aluminum raw material and the zinc raw material. A content of the zinc raw material is in a range from 25 parts by mass to 70 parts by mass with respect to 100 parts by mass of the aluminum raw material. The additional raw material contains at least one selected from the group consisting of a boron compound, a tungsten compound, a titanium compound, a bismuth compound, and a fluorine compound, and a content of the additional raw material is in a range from 0.05 parts by mass to 20 parts by mass with respect to 100 parts by mass of the aluminum raw material. The thermally conductive particles satisfy predetermined conditions.

## Description

TECHNICAL FIELD

The present invention relates to thermally conductive particles that are excellent in reducing mechanical wear and a production method thereof.

BACKGROUND ART

A large number of materials are currently studied for use as a thermally conductive material. As the degree of integration in semiconductor devices improves, the demand for heat dissipation is becoming stronger, and the development of materials with much higher thermal conductivity and insulation than conventional materials is becoming essential. A composite material (resin composition) obtained by kneading a thermally conductive filler into a resin is known as a material that satisfies these requirements.

Alumina is used in many situations as a filler for composite materials, because alumina is inexpensive, has good thermal conductivity and insulation, and is highly resistant to water and acid. However, alumina powder contained in the thermally conductive composition, which is a very hard material, is one of causes of promoting wear of equipment such as devices for processing the thermally conductive composite material into pellets, sheets, or the like. For use in processed products, there is a strong demand for a thermally conductive filler that has high thermal conductivity and low abrasiveness.

CITATION LIST

PATENT LITERATURE(S)

    Patent Literature 1: JP 2009-249226 A
    Patent Literature 2: WO 2015/0137468 A1

SUMMARY OF THE INVENTION

PROBLEM(S) TO BE SOLVED BY THE INVENTION

Alumina, which has high Mohs hardness and thus puts a load on a blade or a shaft of an extruder, is difficult to be kneaded into a resin composition and the like. In addition, component parts worn by alumina are possibly mixed in to cause contamination. Further, when used in a resin, alumina may increase viscosity of the resin to deteriorate moldability and processability. In order to solve the above problems, studies have been made to provide a thermally conductive material that has lower mechanical abrasiveness and lower viscosity when being kneaded into a resin than alumina.

However, spherical zinc oxide particles disclosed in Patent Literature 1, whose surface is coated, still require improvement because of low thermal conductivity of zinc oxide per se. While Patent Literature 2 discloses a fired product of an alumina-based compound and a compound of metal other than aluminum, the fired product disclosed therein includes only a combination of an aluminum raw material and a zinc raw material.

The invention is made in view of the above problems associated with such related techniques. An object of the invention is to provide low-hardness alumina-based thermally conductive particles (sometimes referred to as "thermally conductive particles" hereinafter) that are excellent not only in thermal conductivity but also in chemical resistance, water resistance, and electrical insulation, and have low mechanical abrasiveness, and that are usable for producing materials and articles such as resin compositions with excellent fillability and moldability, as well as a production method thereof.

As a result of diligent studies made by the inventors in order to solve the above problems, it has been found that thermally conductive particles, which are produced as follows, exhibit both of low mechanical abrasiveness and high thermal conductivity. The thermally conductive particles are produced by firing a mixture of an aluminum raw material, a zinc raw material, and an additional raw material (i.e., other than the aluminum raw material and the zinc raw material) selected from the group consisting of a boron compound, a titanium compound, a tungsten compound, a bismuth compound, and a fluorine compound at a predetermined temperature to react the materials and produce a compound; and then pulverizing the compound. It has also been found that the thermal conductivity, kneadability into a resin, and applicability to a coating material can be effectively improved by controlling the shape and/or surface texture of particles. It has been found that, with the use of the above thermally conductive particles, high thermal conductivity can be imparted to a matrix and also wear of equipment such as devices for processing or molding the thermally conductive composite materials can be inhibited.

MEANS FOR SOLVING THE PROBLEM(S)

Specifically, the following thermally conductive particles and production method thereof are provided by the invention.

[1] Thermally conductive particles containing: at least a fired product obtained by firing an aluminum raw material, a zinc raw material, and an additional raw material other than the aluminum raw material and the zinc raw material, where

a content of the zinc raw material is in a range from 25 parts by mass to 70 parts by mass with respect to 100 parts by mass of the aluminum raw material,
the additional raw material contains at least one selected from the group consisting of a boron compound, a tungsten compound, a titanium compound, a bismuth compound, and a fluorine compound, a content of the additional raw material being in a range from 0.05 parts by mass to 20 parts by mass with respect to 100 parts by mass of the aluminum raw material, and
conditions below are satisfied:

(1) a viscosity of a resin composition for viscosity measurement is 3,000 mPa•s or less as measured using an E-type viscometer at a measurement temperature of 25 degrees C using a cone rotor (3 degrees × R9.7) and at a rotation speed of 100 s$^{-1}$, the resin composition for viscosity measurement being obtained by: mixing 50 g of the thermally conductive particles and 50 g of an epoxy resin having an epoxy equivalent weight ranging from 200 g/eq to 1,000 g/eq; and kneading a mixture of the thermally conductive particles and the epoxy resin using a planetary centrifugal mixer at 1,000 rpm for one minute and 2,000 rpm for one minute, the epoxy resin having a viscosity ranging from 400 mPa•s to 900 mPa•s as measured using an E-type viscometer at a measurement temperature of 25 degrees C using a cone rotor (3 degrees × R9.7) and at a rotation speed of 100 s$^{-1}$;
(2) a wear rate of the thermally conductive particles is 4 kcps or less, which is calculated by a formula below based on X-ray fluorescence intensities (kcps) of iron elements before and after a wear test, the wear rate being obtained by: placing 500 parts by mass of SUS304 steel balls with a diameter of 5 mm and 100 parts by mass of the thermally conductive particles into a cylindrical container in a form of a 250 mL wide-mouth bottle; rotating the cylindrical container at 80 rpm for three hours with a center axis of a cylinder of the cylindrical container as a rotation axis; separating the steel balls and the thermally conductive particles using a sieve having an opening size of 1 mm to obtain the thermally conductive particles after the wear test; mixing 4 parts by mass of each of the thermally conductive particles before and after the wear test and 8 parts by mass of lithium borate to obtain mixtures; pulverizing each of the mixtures in a mortar for five minutes; and measuring an intensity (kcps) of an iron element in each of the pulverized mixtures using an X-ray fluorescence spectrometer, where wear rate = (X-ray fluorescence intensity of iron element after wear test) - (X-ray fluorescence intensity of iron element before wear test);

and
(3) a thermal conductivity of a test piece measured by a thermophysical property measurement by a hot-disk method is 0.80 W/m•K or more, the test piece being prepared by: kneading 30 parts of a mixture liquid, which is obtained by mixing an epoxy resin having an epoxy equivalent weight ranging from 200 g/eq to 1,000 g/eq and an amine curing agent having an amine value ranging from 100 mg KOH/g to 500 mg KOH/g at a ratio ranging from 3:1 to 4:1, and 70 parts of the thermally conductive particles to prepare a resin composition; mold-pressing the resin composition into a circular sheet molded product having a diameter of 100 mm or more and a thickness of 4 mm or more; heat-curing the circular sheet molded product at a set temperature of 120 degrees C for one hour; allowing the circular sheet molded product to be cooled; and cutting the circular sheet molded product into four equal sections to form a fan shape with a center angle of 90 degrees.

[2] The thermally conductive particles according to [1], where the additional raw material other than the fluorine compound is at least one selected from the group consisting of oxide, oxoacid salt, hydroxide, carbonate, and basic carbonate.
[3] The thermally conductive particles according to [1] or [2], where the thermally conductive particles are colored by containing at least one element selected from the group consisting of iron, cobalt, copper, manganese, nickel, and chromium. [4] A mixture obtained by mixing a thermally conductive filler with the thermally conductive particles according to any one of [1] to [3].

[5] The mixture according to [4], where the thermally conductive filler is at least one selected from the group consisting of barium sulfate, talc, boron nitride, and magnesium oxide.

[6] A production method of the thermally conductive particles according to any one of [1] to [3], the method including: firing a raw material mixture containing an aluminum raw material, a zinc raw material, and an additional raw material other than the aluminum raw material and the zinc raw material, where

the aluminum raw material is at least one selected from the group consisting of boehmite, aluminum hydroxide, and alumina, and
the zinc raw material is at least one selected from the group consisting of zinc oxide and basic carbonate.

[7] The production method of the thermally conductive particles according to [6], where the raw material mixture is fired at a temperature in a range from 1,000 degrees C to 1,600 degrees C.

[8] An article containing the thermally conductive particles according to any one of [1] to [3].

[9] The article according to [8], where the article is any one of a gravure ink, a coating liquid, a resin composition, and an adhesive composition.

[10] A resin composition usable for forming a thermally conductive resin composition, the resin composition containing:

the mixture according to [4] or [5]; and a formation resin.

[11] The resin composition according to [10], where a content of the mixture is in a range from 5 mass% to 95 mass% with respect to an entirety of the formation resin.

[12] A thermally conductive thin film formed by applying the article according to [9].

[13] The article according to [8], where the article is usable as a heat dissipation member for any one of an electronic device component, an electronic device housing an EV motor, and a lithium battery.

According to the above aspects of the invention, thermally conductive particles that are excellent not only in thermal conductivity but also in chemical resistance, water resistance, and electrical insulation, cause less wear of processing devices, have good kneadability (fillability) into a resin, and that, by adding a coloring agent, are usable for producing materials and articles such as colored resin compositions excellent in moldability, as well as a production method thereof can be provided. Further, according to the above aspects of the invention, a thermally conductive resin composition and article using the above thermally conductive particles can be provided.

DESCRIPTION OF EMBODIMENT(S)

Thermally Conductive Particles

An exemplary embodiment of the invention will be described below. However, the invention is by no means limited by the exemplary embodiment described below. Thermally conductive particles according to the exemplary embodiment are produced by firing a raw material mixture containing an aluminum raw material, a zinc raw material, and an additional raw material other than the aluminum raw material and the zinc raw material. The aluminum raw material is at least one selected from the group consisting of alumina, boehmite, and aluminum hydroxide. The zinc raw material is at least one selected from the group consisting of zinc oxide and basic carbonate. The raw material mixture contains the zinc raw material and further the additional raw material selected from the group consisting of a boron compound, a titanium compound, a tungsten compound, a bismuth compound, and a fluorine compound. The content of the zinc raw material is more than 20 parts by mass and 70 parts by mass or less with respect to 100 parts by mass of the aluminum raw material. The content of the additional raw material is in a range from 0.05 parts by mass to 20 parts by mass with respect to 100 parts by mass of the aluminum raw material serving as a starting material. Details of the thermally conductive particles according to the exemplary embodiment will be described below.

Main components of the thermally conductive particles according to the exemplary embodiment are $\alpha$-alumina and spinel-crystal-structure zinc aluminate. The volume average particle size of the thermally conductive particles is preferably in a range from 0.1 $\mu$m to 50 $\mu$m. With the use of a composition containing the above thermally conductive particles as a filler, high thermal conductivity can be imparted to the composition. In addition, since the hardness of the thermally conductive particles is lower than that of particles including only $\alpha$-alumina, wear of equipment such as devices for molding or processing the compositions can be inhibited. The average particle size can be measured using a laser diffraction particle size distribution analyzer or a transmission electron microscope image.

It is necessary that the content of the zinc raw material in the raw material mixture is more than 20 parts by mass and 70 parts by mass or less, more preferably in a range from 25 parts by mass to 65 parts by mass, with respect to 100 parts by mass of the aluminum raw material. When the content of the zinc raw material is 20 parts by mass or less, the effect for improving the hardness and thermal conductivity cannot be obtained. On the other hand, when the content of the zinc raw material exceeds 70 parts by mass, the thermal conductivity decreases. The thermally conductive particles with the contents of the aluminum raw material and the zinc raw material within the above ranges are excellent in, while keeping various resistances, thermal conductivity, chemical resistance, and water resistance, have low abrasiveness, and also have good kneadability (compatibility) to a resin, and are usable for producing materials and articles such as resin compositions that are excellent in moldability.

In addition to the zinc raw material, the additional raw material other than the aluminum raw material and the zinc raw material is mixed. These components are used to supplement the zinc component. The oxide material is added in order to solve problems such as when it is difficult to form $\alpha$-alumina or when distribution of particle size needs to be adjusted.

The content of the additional raw material in the raw material mixture is in a range from 0.05 parts by mass to 20 parts by mass, more preferably in a range from 0.1 parts by mass to 10 parts by mass, still more preferably in a range from 0.1 parts by mass to 8 parts by mass, and still further more preferably in a range from 0.5 parts by mass to 5 parts by mass, with respect to 100 parts by mass of the aluminum raw material serving as a starting material. When the content of the additional raw material is less than 0.05 parts by mass with respect to 100 parts by mass of the aluminum raw material serving as a starting material, particle size distribution becomes broad, resulting in reducing fillability. On the other hand, when the content of the additional raw material is more than 20 parts by mass with respect to 100 parts by mass of the aluminum raw material serving as a starting material, thermal conductivity is lowered. By setting the content of the additional raw material within the above range with respect to 100 parts by mass of the aluminum raw material serving as a starting material, the thermally conductive particles can be provided that are excellent in thermal conductivity, chemical resistance, water resistance, and electrical insulation, and are usable for producing materials and articles such as resin compositions having low abrasiveness and excellent moldability.

For the viscosity of the thermally conductive particles according to the exemplary embodiment upon being added to a resin, a numerical value obtained when 50 parts by mass of the thermally conductive particles are added to 50 parts by mass of an epoxy resin is used as an index. A sample to be used for viscosity measurement was prepared by kneading at 1,000 rpm for one minute and defoaming at 2,000 rpm for one minute using a planetary centrifugal mixer. The resin composition for viscosity measurement obtained by the above process was measured with an E-type viscometer at a measurement temperature of 25 degrees C using a cone rotor (3 degrees $\times$ R9.7) and at a rotation speed of 100 s$^{-1}$. The viscosity of the epoxy resin composition at this time is necessary to be 3,000 mPa•s or less, preferably 2,500 mPa•s or less. This is because processability is deteriorated when the viscosity is more than 3,000 mPa•s. The lower limit is not specifically limited. However, when the viscosity is less than 10 mPa•s, it may be difficult to form a coating film. According to the above arrangement, a thermally conductive resin composition that is excellent in moldability and/or processability of resin can be produced.

For the abrasiveness of the thermally conductive particles according to the exemplary embodiment, 500 parts by mass of SUS304 steel balls with a diameter of 5 mm and 100 parts by mass of the thermally conductive particles were placed into a cylindrical container in a form of a wide-mouth bottle of 250 mL, and the cylindrical container was rotated at 80 rpm for three hours with a center axis of the cylinder of the cylindrical container as a rotation axis. Then, the steel balls and the thermally conductive particles were separated using a sieve having an opening size of 1 mm, thereby obtaining the thermally conductive particles after a wear test. 4 parts by mass of each of the thermally conductive particles before and after the wear test were mixed with 8 parts by mass of lithium borate and then were pulverized in a mortar for five minutes to prepare samples, whose intensities of iron element were measured using an X-ray fluorescence spectrometer. The abrasiveness was evaluated based on a wear rate of the steel balls, which was calculated from the X-ray fluorescence intensities (kcps) of the iron elements before and after the wear test according to the following formula.

Wear rate = (X-ray fluorescence intensity of iron element after wear test) - (X-ray fluorescence intensity of iron element before wear test)

It is necessary that the wear rate is 4 kcps or less. When the wear rate exceeds 4 kcps, devices are worn while the thermally conductive particles are molded or processed as a resin composition due to the hardness of the thermally conductive particles, which is unfavorable.

For the thermal conductivity of the thermally conductive particles according to the exemplary embodiment, a numerical value obtained when 70 parts by mass of the thermally conductive particles are added to 30 parts by mass of a mixture liquid of an epoxy resin and an amine curing agent is used as an index. A sample used for measuring the thermal conductivity was prepared by mold-pressing the resin composition into a circular sheet molded product with a diameter of 100 mm or more and a thickness of 4 mm or more; heat-curing the molded product at a set temperature of 120 degrees C for one hour; allowing the molded product to be cooled; and then cutting the molded product into four equal sections to form a fan shape having a center angle of 90 degrees. It is necessary that the thermal conductivity of the epoxy resin composition, which is measured by thermophysical property measurement by the hot-disk method, is 0.80 W/m•K or more, more preferably 0.90 W/m•K or more. When the thermal conductivity is less than 0.80 W/m•K, the thermal conductivity performance is insufficient. High thermal conductivity is thus provided when used in electronic components, achieving a desired heat dissipation performance.

For the epoxy resin used for thermal conductivity and viscosity measurement, it is necessary that an epoxy equivalent weight is in a range from 200 g/eq to 1,000 g/eq, more preferably in a range from 300 g/eq to 800 g/eq, and still more preferably in a range from 350 g/eq to 700 g/eq. When the epoxy equivalent weight is less than 200 g/eq, flexibility after being cured is deteriorated, and air bubbles are not removed and/or molding becomes difficult, thereby making various measurements difficult. In contrast, when the epoxy equivalent weight exceeds 1,000 g/eq, the viscosity is so lowered that flexibility becomes excessively high, causing particles to settle, thereby making it difficult to form uniform test samples and, consequently, to perform various measurements.

Further, it is necessary that the viscosity of the epoxy resin, which is measured by an E-type viscometer at a measurement temperature of 25 degrees C using a cone rotor (3 degrees × R9.7) and at a rotation speed of 100 s$^{-1}$, is in a range from 400 mPa•s to 900 mPa•s. The viscosity within the above range is more preferable in terms of good moldability because the viscosity when 50 g of the thermally conductive particles and 50 g of the epoxy resin are mixed is 3,000 mPa•s or less. When the viscosity of the epoxy is less than 400 mPa•s, sedimentation occurs, making measurement difficult. The viscosity of the epoxy exceeding 900 mPa•s causes deterioration in workability such as deterioration in moldability and measurement becomes difficult, which is unfavorable.

It is necessary for the amine curing agent used in measuring the thermal conductivity to have an amine value in a range from 100 mg KOH/g to 500 mg KOH/g, more preferably in a range from 150 mg KOH/g to 450 mg KOH/g. When the amine value is less than 100 mg KOH/g, it is difficult to uniformly mix the amine curing agent due to high viscosity, causing difficult handling, which is unfavorable. At the amine value of exceeding 500 mg KOH/g, the cured resin becomes excessively hard, making it difficult to perform various measurements, which is unfavorable.

The ratio of the epoxy resin to the amine curing agent in the mixture liquid is set in a range from 3:1 to 4:1, i.e., the epoxy resin : the amine curing agent = 3:1 to 4:1. The mixture ratio out of the above range is unfavorable due to insufficient curing. Typical amine curing agent is usable as long as the epoxy resin is curable. Examples of the amine curing agent include amine, aliphatic amine, aromatic amine, and modified amine.

The thermally conductive particles according to the exemplary embodiment are excellent in thermal conductivity, cause less wear of processing devices, and excellent in chemical resistance, water resistance, and electrical insulation. Further, the thermally conductive particles according to the exemplary embodiment have high wettability to the resin and good kneadability (fillability) into the resin, enabling the production of a material such as a resin composition with excellent moldability and an article such as a coating material and an adhesive composition.

The thermally conductive particles according to the exemplary embodiment, which are obtained by firing a raw material mixture containing an aluminum raw material, a zinc raw material, and an additional raw material, preferably include α-alumina and spinel-crystal-structure zinc aluminate as main components.

Aluminum Raw Material

Examples of the usable aluminum material include alumina, boehmite, and aluminum hydroxide. The shape and particle size of the aluminum raw material are not specifically limited. However, in view of dispersibility and the like of the thermally conductive particles, an average particle size of the aluminum raw material is preferably in a range from 1 μm to 50 μm. More specific shapes of the aluminum raw material include spherical, amorphous, and the like.

Raw Material Mixture

The raw material mixture used with the aluminum raw material contains the additional raw material in addition to the zinc raw material. The additional raw material is at least one selected from the group consisting of a boron compound, a titanium compound, a tungsten compound, a bismuth compound, and a fluorine compound. These compounds contribute to improvement in dispersibility of the thermally conductive particles, promotion in forming α-alumina, and/or adjustment in particle size distribution.

Zinc Raw Material

Examples of the usable zinc raw material include basic zinc carbonate, zinc hydroxide, and zinc oxide.

The shape and particle size of the zinc raw material are not specifically limited. However, in view of dispersibility and the like of the thermally conductive particles, an average particle size of the zinc raw material is preferably in a range

from 0.1 μm to 50 μm.

Additional Raw Material

The boron compound, which is an example of the additional raw material, may be, for instance, boric acid, sodium borate, ammonium borate, magnesium borate, and lithium borate. Examples of the titanium compound include rutile-type titanium oxide and anatase-type titanium oxide. Examples of the tungsten compound include tungsten oxide, ammonium tungstate, and sodium tungstate. Examples of the bismuth compound include bismuth oxide, basic bismuth carbonate, and sodium bismuthate. Examples of the fluorine compound include lithium fluoride, sodium fluoride, potassium fluoride, and aluminum fluoride. Of the above, boric acid, sodium tungstate, titanium oxide, basic bismuth carbonate, sodium fluoride, or aluminum fluoride is preferably used, because those provide thermally conductive particles with high fillability.
The additional raw material (other than the fluorine compound) is preferably at least one selected from the group consisting of oxide, oxoacid salt, hydroxide, carbonate, and basic carbonate.

Coloring Agent

In addition, the thermally conductive particles according to the present exemplary embodiment can be colored thermally conductive particles, by containing at least one element selected from the group consisting of iron, cobalt, copper, manganese, and nickel, without adding pigments and dyes.

Surface Treatment

The thermally conductive particles according to the exemplary embodiment may be surface-treated. The surface-treated thermally conductive particles have improved affinity and dispersibility with the resin, and therefore, an article such as a resin composition with excellent thermal conductivity can be produced. Examples of a compound (treatment agent) used for the surface treatment include fatty acids, fatty acid esters, fatty acid metal salts, phosphate esters, phosphate ester metal salts, silane coupling agents, surfactants, polymer flocculants, titanates, and silicone. One or more of these treatment agents can be used alone or in combination. The amount of the compound(s) used for the surface treatment is preferably in a range from 0.01 parts by mass to 5 parts by mass with respect to 100 parts by mass of the thermally conductive particles. Exemplary treatment methods include a method of adding a treatment agent into powder of thermally conductive particles, mixing the resultant mixture, and performing the treatment, and a method of adding water into powder of thermally conductive particles, dispersing the powder, and then adding a treatment agent thereto, followed by filtration and drying.

Use of Thermally Conductive Particles

Among the preferred uses of the thermally conductive particles according to the exemplary embodiment, addition to various plastics, such as thermoplastic resins and thermosetting resins, for the purpose of imparting thermal conductivity property, is effective. Examples of the usable thermoplastic resin include a polyethylene resin, polypropylene resin, ethylene-propylene copolymer, ethylene vinyl acetate copolymer, acrylonitrile-ethylene-styrene copolymer, acrylonitrile-butadiene-styrene copolymer, acrylonitrile-styrene copolymer, polyvinyl chloride resin, polystyrene resin, polyacrylonitrile resin, polyamide resin, thermoplastic polyimide resin, thermoplastic urethane resin, polyaminobismaleimide resin, polyamideimide resin, polyetherimide resin, polymethyl methacrylate resin, polyvinyl acetate resin, polycarbonate resin, polyacetal resin, polyethylene terephthalate resin, polybutylene terephthalate resin, polyphenylene oxide resin, polyphenylene sulfide resin, polysulfone resin, polyethersulfone resin, polyetheretherketone resin, polyallylsulfone resin, bismaleimidetriazine resin, polymethylpentene resin, fluoride resin, liquid crystal polymer, olefin-vinyl alcohol copolymer, ionomer resin, and polyarylate resin. One or more of the thermoplastic resins can be used alone or in combination. Examples of the thermosetting resin include a phenol resin, urea resin, epoxy resin, melamine resin, silicone resin, polyurethane resin, unsaturated polyester resin, alkyd resin, polyimide resin, acrylic resin, and (modified) polyphenylene ether. One or more of the thermosetting resins can be used alone or in combination.

Production Method of Thermally Conductive Particles

Next, a production method of the thermally conductive particles according to the exemplary embodiment will be described below. The production method of the thermally conductive particles according to the exemplary embodiment includes steps of: mixing an aluminum raw material, a zinc raw material, and an additional raw material other than the aluminum raw material and the zinc raw material to obtain a raw material mixture (Step (1)); and firing the raw material mixture (Step (2)).

According to the production method, particles having lower mechanical abrasiveness due to lower hardness and having higher thermal conductivity than typical alumina can be easily produced. The reason thereof is not necessarily clear, but the inventors surmise as follows. Specifically, the above thermally conductive particles include at least $\alpha$-alumina and spinel-crystal-structure zinc aluminate. In the mixed crystal constituting a filler composition made of the above thermally conductive particles as a material, a large number of $\alpha$-alumina fine particles are present between the particles of the spinel-crystal-structure zinc aluminate, thereby increasing a contact area between the particles and reducing interparticle thermal resistance (interfacial thermal resistance). Accordingly, the thermally conductive particles exhibit higher thermal conductivity than pure spinel-crystal-structure zinc aluminate. Meanwhile, the zinc aluminate particles having a spinel crystal structure are inferior to $\alpha$-alumina in terms of thermal conductivity, but have low mechanical abrasiveness. Accordingly, the produced thermally conductive particles have mechanical abrasiveness lower than alumina. A ratio of $\alpha$-alumina to spinel-crystal-structure zinc aluminate ($\alpha$-alumina : spinel-crystal-structure zinc aluminate) in the thermally conductive particles is preferably in a range from 8:2 to 1:9, more preferably in a range from 6:4 to 4:6. Especially, the thermal conductivity and hardness are well-balanced when the ratio is 5:5.

In Step (1), the aluminum raw material, the zinc raw material, and the additional raw material are mixed. A device for mixing the aluminum raw material, zinc raw material, and additional raw material may be a machine such as a pot mill, Henschel mixer, air mix, conical blender, planetary ball mill, vibration mill, ribbon mixer, and vertical blender. The respective components are mixed by such a machine, and the resultant mixture is fired. In mixing the respective components, it is only necessary to mix so that the respective components become uniform. The content of each component in the raw material mixture is as described above.

In Step (2), the raw material mixture obtained in Step (1) is fired at a temperature in a range from 1,000 to 1,600 degrees C. Preferably, the raw material mixture is fired at a temperature in a range from 1,200 to 1,500 degrees C. Through the firing, the aluminum raw material and the zinc raw material can be converted into crystallized $\alpha$-alumina and spinel-crystal-structure zinc aluminate.

When the firing temperature is lower than 1,000 degrees C, it is difficult to form the crystalline structures of $\alpha$-alumina and spinel-crystal-structure zinc aluminate. In this case, durability is lowered due to residual unreacted zinc raw material. Since the thermal conductivity of transition alumina generated at a low temperature is lower than the thermal conductivity of $\alpha$-alumina, it is preferable to form $\alpha$-alumina and spinel-crystal-structure zinc aluminate through firing. When the firing temperature exceeds 1,600 degrees C, the properties of the resultant thermally conductive particles do not significantly change, which is a waste of energy consumption. Methods for checking the presence of $\alpha$-alumina and spinel-crystal-structure zinc aluminate in the thermally conductive particles include a method of comparing a peak obtained through X-ray diffraction measurement of powder of standard substance of $\alpha$-alumina and spinel-crystal-structure zinc aluminate with a peak obtained through X-ray diffraction measurement of powder of the produced thermally conductive particles. When $\alpha$-alumina and spinel-crystal-structure zinc aluminate are contained, the measurements are equal to a sum of the peaks, where quantitative determination is possible by comparing intensities of the peaks. After firing, the fired product is disintegrated (crashed) as necessary, resulting in the thermally conductive particles according to the exemplary embodiment. Any known method is adoptable for disintegration with the use of various known machines such as a hammer mill, roll mill, ball mill, jet mill, bead mill, or vibration mill.

Thermally Conductive Composition (Mixture)

It is also preferred that the thermally conductive particles according to the exemplary embodiment and any other thermally conductive filler, such as alumina, boron nitride, graphite, zinc oxide, barium sulfate, talc, and magnesium oxide, are used in combination in a thermally conductive composition (mixture). Details of the filler will be described below.

Typical fillers are added to materials such as a resin, rubber, and coating material to improve strength, functionality, and the like. As the content of thermally conductive filler increases, the melt flowability and mechanical strength of materials such as a resin typically decrease. In addition, when carbon-based fillers with conductivity are blended in the resin, insulation inherent to the resin are likely to be impaired. Ceramic-based fillers have insulation, but low thermal conductivity. Examples of the thermally conductive filler include metallic fillers such as silver, copper, aluminum, and iron; inorganic fillers such as alumina, magnesia, silica, boron nitride, aluminum nitride, silicon carbide, boron carbide, and titanium carbide; and carbon-based fillers such as diamond and graphite. Fillers such as alumina, magnesium oxide, zinc oxide, silica, boron nitride, aluminum nitride, and diamond are considered to be preferred in electronic devices that require high electrical insulation. However, these fillers have many problems in terms of water resistance, chemical resistance, hardness, and electrical insulation.

In contrast, the thermally conductive particles according to the exemplary embodiment can be suitably used as an improved filler because the weaknesses of the various fillers mentioned above have been improved and the thermally conductive particles according to the exemplary embodiment have excellent properties. Also preferably, the thermally conductive particles according to the exemplary embodiment are used together with the various thermally conductive fillers mentioned above to compensate for the weaknesses of existing thermally conductive fillers. That is, when using the thermally conductive particles according to the exemplary embodiment in a thermally conductive composition containing the various thermally conductive fillers described above, the thermally conductive particles according to the exemplary embodiment are preferably prepared according to the desired properties. The added amount of the thermally conductive filler is preferably in a range from 10 parts by mass to 150 parts by mass with respect to 100 parts by mass of the thermally conductive particles. When the added amount of the thermally conductive filler is less than 10 parts by mass, the effect of the thermally conductive filler may be unlikely to obtain. When the added amount of the thermally conductive filler exceeds 150 parts by mass, also the effect of the thermally conductive filler may be unlikely to obtain

Article

Examples of an article according to the exemplary embodiment includes articles (thermally conductive articles, thermally conductive materials), such as gravure inks, coating liquids, resin compositions, and adhesive compositions, containing the aforementioned thermally conductive particles. Also preferably, the article according to the exemplary embodiment further contains the various thermally conductive fillers mentioned above, if necessary.

Gravure Ink

The thermally conductive particles according to the exemplary embodiment can be added to a gravure ink usable as a topcoat agent for battery packaging materials and the like. The content of the thermally conductive particles in the gravure ink is preferably in a range from 5 mass% to 80 mass%, more preferably in a range from 10 mass% to 50 mass%, with respect to the whole gravure ink. Using such a gravure ink (the topcoat agent for battery packaging materials) results in battery packaging materials with high thermal conductivity and high thermal emissivity as well as excellent chemical resistance such as acid resistance.

Coating Liquid

The thermally conductive particles according to the exemplary embodiment can be added to a coating liquid such as a coating material. The coating liquid may also be used as a preparation for coloration obtained by mixing and dispersing a coloring agent, a resin for forming a coating or molded product, an organic solvent, and the like together with the thermally conductive particles into a vehicle. The content of the thermally conductive particles in the coating liquid is preferably in a range from 5 mass% to 80 mass%, more preferably in a range from 10 mass% to 70 mass%, with respect to the whole coating liquid. The coating film or coating product formed using the thus prepared coating liquid has excellent water resistance, chemical resistance, and insulation, retains strength, and is excellent in thermal conductivity.

Specific examples of the resin that can be contained in the coating liquid include polyolefin-based, polyester-based, polystyrene-based, acrylic-based, fluorine-based, polyamide-based, cellulose-based, polycarbonate-based, or polylactic acid-based thermoplastic resins; and urethane-based, phenolic-based, or silicone-based thermosetting resins. These resins may be emulsions.

Specific examples of a liquid medium that can be contained in the coating liquid include water, methanol, ethanol, butanol, acetone, methyl ethyl ketone, methyl isobutyl ketone, toluene, xylene, butyl acetate, and cyclohexane. Two or more of these liquid media may be used in combination.

The coating liquid may contain "other components" selected as appropriate according to the purpose to the extent that the object of the invention is not impaired. Specific examples of "other components" include antioxidants, UV absorbers, light stabilizers, dispersants, antistatic agents, lubricants, and disinfectants.

Conventional known methods can be employed to apply the coating liquid. Specific examples thereof include spray coating, brush coating, electrostatic coating, curtain coating, coating using a roll coater, and immersion coating. In addition, conventional known methods can be employed to dry the coating liquid after coating to form a film. Specifically, methods such as natural drying or baking may be selected and employed as appropriate depending on the properties of the coating liquid and other factors.

Using the coating liquid results in a coating film or a coating product obtained by applying the coating liquid to a base material. As the base material, a metal, glass, a natural resin, a synthetic resin, ceramics, wood, paper, fiber, non-woven fabric, woven fabric, leather, or the like can be selected according to the purpose. The coating film thus given functionality can be used in various industries such as manufacturing, agriculture, mining, or fishing, in addition to household use. There are no restrictions on the shape of coating, which can be selected according to the purpose, such as a sheet form or a film form.

Resin Composition

The resin composition can be provided by blending the thermally conductive particles according to the exemplary embodiment with a resin such as a polyamide resin or polyolefin resin. More specifically, the resin composition can be obtained by blending and mixing the thermally conductive particles with the resin together with other additive as needed, in accordance with a known method. In addition, a predetermined resin molded product can be produced by molding the obtained resin composition with an extruder. The content of the thermally conductive particles in the resin composition is preferably in a range from 5 mass% to 95 mass% with respect to the whole resin composition. Setting the content of the thermally conductive particles in the above range results in the resin composition that has more excellent water resistance, chemical resistance, and insulation, further retains strength, and is more excellent in moldability. When the content of the thermally conductive particles exceeds 95 mass%, strength and moldability may deteriorate. When the content of the thermally conductive particles is less than 5 mass%, thermal conductivity may be insufficient.

The method for adding the thermally conductive particles to the resin is not specifically limited, and any typically known method can be employed. For instance, in addition to the method of directly blending the thermally conductive particles with the resin, followed by kneading and molding, a method may be employed of using a composition (master batch) in which the thermally conductive particles are dispersed in advance in the resin, lubricant, or the like, at high concentrations. Exemplary other additives include antioxidants, UV absorbers, antistatic agents, antibacterial agents, stabilizers, cross-linking agents, plasticizers, lubricants, mold release agents, flame retardants, and inorganic fillers such as talc, alumina, clay, and silica. Metal soap, polyethylene wax, or the like can also be used as a dispersion aid for the thermally conductive particles. Examples of the metal soap include lithium stearate, magnesium stearate, zinc stearate, calcium stearate, magnesium palmitate, calcium oleate, and cobalt oleate. As the polyethylene wax, various types of polyethylene wax, such as general polymerized, decomposed, or modified types, can be used.

Various organic and inorganic pigments can also be blended as coloring agents in the coating liquid and the resin composition described above. Exemplary coloring agents include organic pigments such as phthalocyanine-based pigments, azo-based pigments, azomethine-based pigments, isoindolinone-based pigments, quinacridone-based pigments, anthraquinone-based pigments, dioxazine-based pigments, and perinone/perylene-based pigments; complex oxide-based pigments other than black; titanium oxide-based pigments such as titanium oxide-based white pigments, titanium oxide-based yellow pigments, and titanium oxide-based black pigments; and inorganic pigments such as carbon black, ultramarine, and colcothar. Exemplary phthalocyanine-based pigments include brominated phthalocyanine blue pigments and phthalocyanine green pigments. Exemplary azo-based pigments include polycondensation azo-based pigments and azomethine azo-based pigments.

In addition, the resin composition can also be obtained by melting and kneading a masterbatch compound in which the thermally conductive particles, various pigments, additives, and the like are blended in a resin for a compound, using an extruder or similar machine. More specifically, the resin composition can be obtained, for instance, by (i) a method of blending the thermally conductive particles and dispersion aid in a resin for a compound, adding other additives as necessary, and mixing the mixture using a mixer such as a Henschel mixer; (ii) a method of kneading the masterbatch compound using a kneader or heated double-roll mill, cooling the compound, and pulverizing the compound into coarse powder using a pulverizer; and (iii) a method of feeding the masterbatch compound to an extruder and extruding the compound to form beads, columns, or other shapes. Molding methods are not specifically limited, and examples thereof include injection molding, extrusion molding, heat compression molding, blow molding, inflation molding, and vacuum molding.

Adhesive Composition

The thermally conductive particles according to the exemplary embodiment can be added to an adhesive and used as an adhesive composition. The types of the resin contained in the adhesive is not limited and may be a resin with adhesiveness such as a urethane-based resin, an epoxy-based resin, a vinyl acetate-based resin, or an acrylic-based resin. The adhesion mechanism is also not limited and may be a chemical reaction type, solvent volatilization type, thermal melting type, or thermal pressure type, or the like. The content of the thermally conductive particles in the adhesive composition is preferably in a range from 5 mass% to 80 mass%, more preferably in a range from 10 mass% to 50 mass%, with respect to the whole adhesive composition. Setting the content of the thermally conductive particles in the above range results in an adhesive composition that is more excellent in thermal conductivity, adhesiveness, water resistance, chemical resistance, and insulation. When the content of the thermally conductive particles exceeds 80 mass%, adhesion strength may be insufficient. When the content of the thermally conductive particles is less than 5 mass%, thermal conductivity may be insufficient.

The thermally conductive articles and the thermally conductive material, such as the above-described gravure ink, coating liquid, resin composition, and adhesive composition are produced using the thermally conductive particles according to the exemplary embodiment, and by using the thermally conductive article and the thermally conductive material, the thermally conductive particles according to the exemplary embodiment can also be used as an electronic device that has heat dissipation (thermal conductivity) and has excellent chemical resistance, water resistance, and insulation. More specifically, the thermally conductive particles according to the exemplary embodiment are usable for metal circuit boards, circuit boards, metal laminated boards, metal clad laminates with inner layer circuits, packaging materials for batteries, sealants, protective sheets, or the like. In addition, the thermally conductive particles according to the exemplary embodiment are usable for adhesive sheets, heat dissipation sheets, heat dissipation coating agents, semiconductor sealants, adhesives, heat dissipation spacers, grease, or the like.

Liquid Composition (Resin Composition)

A liquid composition (resin composition) according to the exemplary embodiment, which is usable in forming a thermally conductive thin film, contains a thermally conductive component (mixture) including the above-described thermally conductive particles, a formation resin, and, as an optional component, a liquid medium. Preferably, the thermally conductive component further contains at least one selected from the group consisting of barium sulfate, talc, boron nitride, and magnesium oxide.

The content of the thermally conductive particles in the liquid composition is preferably in a range from 5 mass% to 80 mass%, more preferably in a range from 10 mass% to 70 mass%, with respect to the whole liquid composition. The content of the thermally conductive component (mixture) is preferably in a range from 20 parts by mass to 600 parts by mass, more preferably in a range from 20 parts by mass to 200 parts by mass, with respect to 100 parts by mass of the formation resin. The thermally conductive thin film formed using the liquid composition prepared as described above has excellent water resistance, chemical resistance, and insulation, retains strength, and is excellent in thermal conductivity.

The formation resin is at least one solvent-soluble resin selected from the group consisting of an acrylic-based resin, a urethane-based resin, a urea-based resin, an epoxy-based resin, a rubber-based resin, a fluorine-based resin, a polyamide-based resin, a polyimide-based resin, a silicone-based resin, a cellulose-based resin, and a thermoplastic elastomer. The liquid medium is the same as that used in the above-described coating liquid.

Thermally Conductive Thin Film and Member for Electronic Device

The thermally conductive thin film according to the exemplary embodiment is a thin film formed by applying the above-described article or the above-described liquid composition (resin composition). The thickness of the thermally conductive thin film is preferably in a range from 20 $\mu$m to 1,000 $\mu$m, more preferably in a range from 50 $\mu$m to 200 $\mu$m.

The thermally conductive thin film according to the exemplary embodiment is usable for a member for an electronic device. The member for an electronic device includes a metal member and the above-described thermally conductive thin film disposed on a surface of the metal member.

Examples of the metal member include metal circuit boards, circuit boards, metal laminated boards, and metal clad laminates with inner layer circuits.

By using the resin composition according to the exemplary embodiment in housings of electronic devices, motors (e.g., EV motors), and lithium batteries, internal heat can be efficiently released to the outside and weight reduction can be achieved, compared with typical metal housings. The article according to the exemplary embodiment is also usable as a heat dissipation member in an electronic device component.

Examples

The invention will be described below with reference to Examples. However, the invention is by no means limited by these Examples. It should be noted that "parts" and "%" in Examples and Comparatives are on a mass basis unless otherwise noted.

Aluminum Raw Material

The following aluminum raw materials were used.

- A-1: aluminum hydroxide (spherical, average particle size: 6 $\mu$m)
- A-2: aluminum hydroxide (spherical, average particle size: 1 $\mu$m)
- A-3: boehmite (spherical, average particle size: 1 $\mu$m)
- A-4: true-sphere alumina (spherical, average particle size: 3 $\mu$m)
- A-5: $\gamma$-alumina (irregular shape, average particle size: 0.1 $\mu$m)

Zinc Raw Material

The following zinc raw materials were used.

- B-1: basic zinc carbonate (average particle size: 10 $\mu$m)
- B-2: zinc oxide (average particle size: 1 $\mu$m)
- B-3: zinc aluminate (average particle size: 10 $\mu$m)

Additional Raw Material

The following raw materials were used.

- C-1: boric acid
- C-2: sodium tungstate dihydrate
- C-3: titanium oxide
- C-4: basic bismuth carbonate
- C-5: sodium fluoride
- C-6: aluminum fluoride

Thermally Conductive Filler

The following fillers were used.

- D-1: barium sulfate (average particle size: 0.9 $\mu$m)
- D-2: talc (average particle size: 4.3 $\mu$m)
- D-3: boron nitride (average particle size: 20 $\mu$m)
- D-4: magnesium oxide (average particle size: 20 $\mu$m)

Production of Thermally Conductive Particles

Example 1

100 parts of aluminum hydroxide (A-1), 27.3 parts of basic zinc carbonate (B-1), 0.5 parts of boric acid (C-1), and 0.5 parts of sodium tungstate dihydrate (C-2) were put into a small mixer and were stirred and mixed to obtain a raw material mixture. The resulting raw material mixture was fired at 1,250 degrees C for three hours in air and then disintegrated to produce thermally conductive particles in powder form. As a result of X-ray diffraction measurement of the powder, the presence of $\alpha$-alumina and spinel-crystal-structure zinc aluminate was confirmed.

Examples 2 to 22

Thermally conductive particles in powder form were obtained in the same manner as in Example 1 above, except that the types and amounts of raw materials listed in Table 1 were used. In Examples 18 to 22, the respective amounts of the thermally conductive fillers shown in the table were added to 100 parts by mass of the fired thermally conductive particles and then were stirred and mixed by a small mixer. As a result of X-ray diffraction measurement of the powder, the presence of $\alpha$-alumina and spinel-crystal-structure zinc aluminate was confirmed.

Comparatives 1 to 11 and 14

Thermally conductive particles in powder form were obtained in the same manner as in Example 1 above, except that the types and amounts of raw materials listed in Table 1 were used. In Comparative 11, the thermally conductive filler in the amount shown in the table was added to 100 parts by mass of the fired thermally conductive particles and then was stirred and mixed by a small mixer. As a result of X-ray diffraction measurement of the powder, the presence of $\alpha$-alumina and spinel-crystal-structure zinc aluminate was confirmed.

Comparatives 12, 13, and 15 to 17

The respective raw materials alone shown in Table 1 were used as samples in Comparatives 12, 13, and 15 to 17.

Comparative 18

Thermally conductive particles in powder form were obtained in the same manner as in Example 1 above, except that the type and amount of the raw material listed in Table 1 was used and the firing temperature was set at 900 degrees C.

The presence of $\alpha$-alumina could not be confirmed as a result of X-ray diffraction measurement of the powder.

Table 1

| | Al Raw Material | | Zn Raw Material | | Additional Raw Material 1 | | Additional Raw Material 2 | | Thermally Conductive Filler | |
|---|---|---|---|---|---|---|---|---|---|---|
| | Type | Parts | Type | Parts | Type | Parts | Type | Parts | Type | Parts |
| Ex. 1 | A-1 | 100 | B-1 | 27.3 | C-1 | 0.5 | C-2 | 0.5 | - | - |
| Ex. 2 | A-1 | 100 | B-1 | 45.4 | C-1 | 0.5 | C-2 | 0.5 | - | - |
| Ex. 3 | A-1 | 100 | B-1 | 63.7 | C-1 | 0.5 | C-2 | 0.5 | - | - |
| Ex. 4 | A-1 | 100 | B-1 | 27.3 | C-1 | 0.5 | - | - | - | - |
| Ex. 5 | A-1 | 100 | B-1 | 27.3 | C-2 | 0.5 | - | - | - | - |
| Ex. 6 | A-1 | 100 | B-1 | 27.3 | C-3 | 0.5 | - | - | - | - |
| Ex. 7 | A-1 | 100 | B-1 | 27.3 | C-4 | 0.5 | - | - | - | - |
| Ex. 8 | A-1 | 100 | B-1 | 27.3 | C-5 | 0.5 | - | - | - | - |
| Ex. 9 | A-1 | 100 | B-1 | 27.3 | C-6 | 0.5 | - | - | - | - |
| Ex. 10 | A-1 | 100 | B-2 | 27.3 | C-1 | 5 | - | - | - | - |
| Ex. 11 | A-1 | 100 | B-1 | 27.3 | C-1 | 0.5 | C-3 | 0.5 | - | - |
| Ex. 12 | A-1 | 100 | B-1 | 63.7 | C-1 | 0.5 | C-3 | 0.5 | - | - |
| Ex. 13 | A-1 | 100 | B-1 | 27.3 | C-1 | 1 | C-2 | 1 | - | - |
| Ex. 14 | A-1 | 100 | B-1 | 27.3 | C-1 | 5 | C-2 | 5 | - | - |
| Ex. 15 | A-2 | 100 | B-1 | 27.3 | C-1 | 0.5 | C-3 | 0.5 | - | - |
| Ex. 16 | A-3 | 100 | B-1 | 27.3 | C-1 | 0.5 | C-2 | 0.5 | - | - |
| Ex. 17 | A-5 | 100 | B-1 | 27.3 | C-1 | 0.5 | C-2 | 0.5 | - | - |
| Ex. 18 | A-1 | 100 | B-1 | 27.3 | C-1 | 0.5 | C-2 | 0.5 | D-1 | 10 |
| Ex. 19 | A-1 | 100 | B-1 | 27.3 | C-1 | 0.5 | C-2 | 0.5 | D-2 | 10 |
| Ex. 20 | A-1 | 100 | B-1 | 27.3 | C-1 | 0.5 | C-2 | 0.5 | D-3 | 10 |
| Ex. 21 | A-1 | 100 | B-1 | 27.3 | C-1 | 0.5 | C-2 | 0.5 | D-4 | 10 |
| Ex. 22 | A-1 | 100 | B-1 | 27.3 | C-1 | 0.5 | C-2 | 0.5 | D-4 | 100 |
| Comp. 1 | A-1 | 100 | B-1 | 4.5 | C-1 | 0.5 | C-2 | 0.5 | - | - |
| Comp. 2 | A-1 | 100 | B-1 | 4.5 | C-2 | 0.5 | - | - | - | - |
| Comp. 3 | A-1 | 100 | B-1 | 9.5 | C-2 | 0.5 | - | - | - | - |
| Comp. 4 | A-1 | 100 | B-1 | 13.6 | C-2 | 0.5 | - | - | - | - |
| Comp. 5 | A-1 | 100 | B-1 | 13.6 | - | - | - | - | - | - |
| Comp. 6 | A-1 | 100 | B-1 | 27.3 | - | - | - | - | - | - |
| Comp. 7 | A-3 | 100 | B-1 | 91.7 | - | - | - | - | - | - |
| Comp. 8 | A-1 | 100 | B-1 | 27.3 | C-1 | 30 | C-2 | 0.5 | - | - |
| Comp. 9 | A-1 | 100 | B-1 | 27.3 | C-1 | 0.01 | - | - | - | - |
| Comp. 10 | A-1 | 100 | B-1 | 27.3 | C-5 | 0.01 | - | - | - | - |
| Comp. 11 | A-1 | 100 | B-1 | 27.3 | C-1 | 0.5 | C-2 | 0.5 | D-3 | 200 |
| Comp. 12 | - | - | B-3 | 100 | - | - | - | - | - | - |
| Comp. 13 | A-4 | 100 | - | - | - | - | - | - | - | - |
| Comp. 14 | A-1 | 100 | - | - | C-1 | 0.5 | C-2 | 0.5 | - | - |

(continued)

| | Al Raw Material | | Zn Raw Material | | Additional Raw Material 1 | | Additional Raw Material 2 | | Thermally Conductive Filler | |
|---|---|---|---|---|---|---|---|---|---|---|
| | Type | Parts | Type | Parts | Type | Parts | Type | Parts | Type | Parts |
| Comp. 15 | - | - | B-1 | 100 | - | - | - | - | - | - |
| Comp. 16 | - | - | B-2 | 100 | - | - | - | - | - | - |
| Comp. 17 | - | - | - | - | - | - | - | - | D-3 | 100 |
| Comp. 18 | A-1 | 100 | B-1 | 27.3 | C-1 | 0.5 | C-2 | 0.5 | - | - |

Measurement of Thermal Conductivity

30 parts of a mixture liquid containing an epoxy resin (manufactured by Mitsubishi Chemical Corporation, grade 871, epoxy equivalent weight: 390 to 470 g/eq, viscosity: 400 to 900 mPa•s) and an amine curing agent (manufactured by ADEKA CORPORATION, EH-6024, amine value: 370 mg KOH/g) that were mixed at a ratio of 3.5:1, and 70 parts of the obtained thermally conductive particles were kneaded to obtain a resin composition, and the obtained resin composition was mold-pressed into a circular sheet molded product having a diameter of 100 mm or more and a thickness of 4 mm. Each molded product was then heat-cured at a set temperature of 120 degrees C for one hour, allowed to cool, and cut into four equal sections to form a fan shape having a center angle of 90 degrees. Test pieces were thus prepared. The thermal conductivity of each of the prepared test pieces was measured using a thermophysical property measuring device by the hot-disk method (trade name "TPS-2500S," manufactured by Kyoto Electronics Manufacturing Co., Ltd.). The results are shown in Table 2.

Viscosity Measurement

50 g of the produced thermally conductive particles were added to 50 g of an epoxy resin (manufactured by Mitsubishi Chemical Corporation, grade 871, epoxy equivalent weight: 390 to 470 g/eq, viscosity: 400 to 900 mPa•s) and were kneaded by hand. The hand-kneaded resin composition was further kneaded using a planetary centrifugal mixer (kneading: 1,000 rpm for one minute, defoaming: 2,000 rpm for one minute). The resin composition for viscosity measurement obtained by the above process was measured with an E-type viscometer (trade name "TV-100EH/200" manufactured by Toki Sangyo Co., Ltd.) at a measurement temperature of 25 degrees C using a cone rotor (3 degrees $\times$ R9.7) and at a rotation speed of 100 s$^{-1}$. The evaluation was based on the following criteria. The results are shown in Table 2.

A: 3,000 mPa•s or less
C: more than 3,000 mPa•s

Wear Test

Approximately 500 g of SUS304 steel balls with a diameter of 5 mm (trade name "1-9762-02" manufactured by MISUMI Group Inc.) and approximately 100 g of the produced thermally conductive particles were placed into a cylindrical container in a form of an I-boy wide-mouth bottle of 250 mL (62 mm in diameter, 132 mm in length, manufactured by AS ONE CORPORATION). The cylindrical container was rotated at 80 rpm for three hours with the center axis of the cylinder as a rotation axis. Then, the steel balls and the thermally conductive particles were separated using a sieve having an opening size of 1 mm, thereby obtaining the thermally conductive particles after the wear test. In order to measure the wear rate, 4 g of the thermally conductive particles after the wear test and 8 g of lithium borate were mixed and pulverized for five minutes in a mortar. Similarly, the thermally conductive particles before the wear test were mixed and pulverized in a mortar, and then the intensity of iron element was measured using an X-ray fluorescence spectrometer (trade name "ZSX Primus II," manufactured by Rigaku Corporation). The difference in the X-ray fluorescence intensities (kcps) of iron elements before and after the wear test was calculated by the following formula. The results are shown in Table 2.

Wear rate = (X-ray fluorescence intensity of iron element after wear test) - (X-ray fluorescence intensity of iron element before wear test)

A: wear rate of 4 kcps or less
B: wear rate of more than 4 kcps and 8 kcps or less
C: wear rate of more than 8 kcps

Acid Resistance

A resin molded body for evaluation made of the resin composition containing 70 parts by mass of the thermally conductive particles prepared as above was cutout to a test piece having a size of 20 mm × 20 mm × 60 mm. Then, each of the pieces was immersed for three hours in a hydrochloric acid of pH 2.0 having been heated to 50 degrees C. Withstand voltage was measured before and after the immersion and the acid resistance was evaluated using the obtained measurement values according to the following criteria. The results are shown in Table 2.

Evaluation Criteria for Acid Resistance

A: decrease in withstand voltage from an initial value before immersion to a value after immersion is less than 10%
B: decrease in withstand voltage from an initial value before immersion to a value after immersion is 10% or more and less than 50%
C: decrease in withstand voltage from an initial value before immersion to a value after immersion is 50% or more

Water Resistance

5 parts of the thermally conductive particles were immersed in 100 parts of pure water, and were placed into a container and boiled at 100 degrees C for five minutes, and then were filtrated to obtain a filtrate, which serves as a measurement sample. The measurement sample prepared as above, which was used to measure electrical conductivity using an electrical conductivity meter, was judged and evaluated according to the following criteria. The results are shown in Table 2.

Evaluation Criteria for Water Resistance

A: increase in electrical conductivity from an initial value before immersion to a value after immersion is less than 300 $\mu$S/cm
B: increase in electrical conductivity from an initial value before immersion to a value after immersion is 300 $\mu$S/cm or more and less than 1,000 $\mu$S/cm
C: increase in electrical conductivity from an initial value before immersion to a value after immersion is 1,000 $\mu$S/cm or more

Table 2

|  | Thermal Conductivity (W/m · K) | Wear Rate | Viscosity | Water Resistance | Acid Resistance |
|---|---|---|---|---|---|
| Ex. 1 | 1.02 | A | A | A | A |
| Ex. 2 | 0.96 | A | A | A | A |
| Ex. 3 | 0.94 | A | A | A | A |
| Ex. 4 | 1.01 | A | A | A | A |
| Ex. 5 | 1.02 | A | A | A | A |
| Ex. 6 | 1.00 | A | A | A | A |
| Ex. 7 | 1.01 | A | A | A | A |
| Ex. 8 | 1.01 | A | A | A | A |
| Ex. 9 | 1.00 | A | A | A | A |
| Ex. 10 | 0.86 | A | A | A | A |

(continued)

| | Thermal Conductivity (W/m · K) | Wear Rate | Viscosity | Water Resistance | Acid Resistance |
|---|---|---|---|---|---|
| Ex. 11 | 1.07 | A | A | A | A |
| Ex. 12 | 0.92 | A | A | A | A |
| Ex. 13 | 0.91 | A | A | A | A |
| Ex. 14 | 0.88 | A | A | A | A |
| Ex. 15 | 0.92 | A | A | A | A |
| Ex. 16 | 0.91 | A | A | A | A |
| Ex. 17 | 0.91 | A | A | A | A |
| Ex. 18 | 1.00 | A | A | A | A |
| Ex. 19 | 1.05 | A | A | A | A |
| Ex. 20 | 1.11 | A | A | A | A |
| Ex. 21 | 1.02 | A | A | A | A |
| Ex. 22 | 1.03 | A | A | B | B |
| Comp. 1 | 0.96 | C | A | A | A |
| Comp. 2 | 0.97 | C | A | A | A |
| Comp. 3 | 1.04 | C | A | A | A |
| Comp. 4 | 1.03 | C | A | A | A |
| Comp. 5 | 0.97 | B | C | A | A |
| Comp. 6 | 0.94 | B | C | A | A |
| Comp. 7 | 0.79 | A | C | A | A |
| Comp. 8 | 0.78 | A | A | A | A |
| Comp. 9 | 0.94 | A | C | A | A |
| Comp. 10 | 0.93 | A | C | A | A |
| Comp. 11 | 1.89 | A | C | A | A |
| Comp. 12 | 0.78 | A | A | A | A |
| Comp. 13 | 0.80 | C | A | A | A |
| Comp. 14 | 0.92 | C | A | A | A |
| Comp. 15 | 0.50 | A | A | C | C |
| Comp. 16 | 0.82 | A | A | C | C |
| Comp. 17 | 2.33 | A | C | A | A |
| Comp. 18 | 0.66 | A | A | A | A |

Reference Example 1

In measuring the thermal conductivity of 70 parts of the thermally conductive particles, 70 parts of the thermally conductive particles obtained in Example 1 were used to prepare a test piece. In a test method of the thermal conductivity, a resin composition obtained by mixing 30 parts of polypropylene (manufactured by Prime Polymer Co., Ltd., MFR: 20 g/10 min) and 70 parts of the thermally conductive particles was placed into a plastomill and melt-kneaded at a set temperature of 200 degrees C. The melt-kneaded product was then subjected to mold press molding at 175 degrees C using a 20 mm (length) x 20 mm (width) x 6 mm (height) mold, thereby preparing the test piece. The thermal conductivity of the prepared test piece was measured using the thermophysical property measuring device (trade name "TPS-2500S," manufactured by Kyoto Electronics Manufacturing Co., Ltd.). The thermal conductivity in this reference example was 1.18 W/m•K.

Reference Example 2

A test piece was prepared in the same manner as in Reference Example 1, except that 60 parts of the thermally conductive particles obtained in Example 1 and 10 parts of thermally conductive rounded disc-shaped particles disclosed in Example 3 of Japanese Patent No. 7185798 were used to prepare the test piece. The thermal conductivity in this reference example was 1.19 W/m•K. Mixing particles of different shape gave results within the ranges of Examples, almost the same as when only the thermally conductive particles were used.

Reference Comparative 1

A test piece was prepared in the same manner as in Reference Example 1, except that 70 parts of the thermally conductive particles obtained in Comparative 7 were used to prepare the test piece. The thermal conductivity in this reference comparative was 0.92 W/m•K.

Reference Comparative 2

A test piece was prepared in the same manner as in Reference example 1, except that 70 parts of the thermally conductive particles obtained in Comparative 14 were used to prepare the test piece. The thermal conductivity in this reference comparative was 1.07 W/m•K.

Preparation and Evaluation of Adhesive

Application Example 1, and Comparative Application Example1

Each dispersion liquid was prepared by mixing 35 parts of the thermally conductive particles obtained in each of Example 1 and Comparative 13 and 65 parts of polyester polyol having a viscosity of 300 mPa•s, and dispersing each mixture with a disper. There were mixed 98 parts of each of the prepared dispersion liquids and 2 parts of polyisocyanate having a viscosity of 2,600 mPa•s, and each mixture was stirred with a dissolver to obtain each urethane resin-based chemical reaction-type adhesive. After evenly applying each of the prepared adhesives to release paper with a glass rod, it was placed in an oven at 100 degrees C for two minutes to evaporate the solvent. In addition, it was placed in an oven at 40 degrees C for 96 hours to form a cured film of each of the adhesives (Application Example 1, and Comparative Application Example 1). The thermal conductivity of the cured film in Comparative Application Example 1, which was formed using the $\alpha$-alumina in Comparative 13, was 0.49 W/m•K. In contrast, the thermal conductivity of the cured film in Application Example 1, which was formed using the thermally conductive particles in Example 1, was found to be high, 0.56 W/m•K.

Evaluation of Thermally Conductive Particles

Measurement of Thermal Conductivity (Block)

Each resin composition obtained by mixing 50 parts of polypropylene (manufactured by Prime Polymer Co., Ltd., MFR: 20 g/10 min) and 50 parts of each thermally conductive component was placed in a plastomill and melt-kneaded at a set temperature of 200 degrees C. Each melt-kneaded product was then subjected to mold press molding at 175 degrees C using a 20 mm (length) x 20 mm (width) x 6 mm (height) mold, thereby preparing each test piece. The thermal conductivity of each of the obtained test pieces was measured using a "standard isotropy measuring module" of the thermophysical property measuring device (trade name "TPS-2500S", manufactured by Kyoto Electronics Manufacturing Co., Ltd.). The thermal conductivity of the test piece formed using $\alpha$-alumina of Comparative 13 was 0.43 W/m•K. In contrast, it was found that the thermal conductivity of the test piece, which was formed using the thermally conductive particles of Example 4, was as high as 0.59 W/m•K.

Dielectric Strength

A resin composition obtained by mixing 30 parts of polypropylene (manufactured by Prime Polymer Co., Ltd., MFR: 20 g/10 min) and 70 parts of the thermally conductive particles was placed into a plastomill and was melt-kneaded at a set temperature of 200 degrees C. Subsequently, the resin composition was subjected to mold press molding at 175 degrees C to obtain a molded body for evaluation. The obtained molded body for evaluation was cut out to a test piece of 100 mm × 100 mm × 1 mm in thickness. Each of the obtained test pieces was immersed in oil and the dielectric breakdown voltage was measured in accordance with JIS K6911 and C2110-1 under conditions of alternating current of 10 mA and voltage increase rate of 2 kV/sec. The value of dielectric strength (kV/mm), which is obtained by dividing the value of the measured dielectric breakdown voltage by the thickness (mm) of each test piece is shown in Table 3.

Table 3

|  | Dielectric Strength (kV/mm) |
| --- | --- |
| Ex. 4 | 37 |
| Comp. 13 | 30 |
| Resin Only | 56 |

**Claims**

1. Thermally conductive particles comprising:

at least a fired product obtained by firing an aluminum raw material, a zinc raw material, and an additional raw material other than the aluminum raw material and the zinc raw material, wherein
a content of the zinc raw material is in a range from 25 parts by mass to 70 parts by mass with respect to 100 parts by mass of the aluminum raw material,
the additional raw material contains at least one selected from the group consisting of a boron compound, a tungsten compound, a titanium compound, a bismuth compound, and a fluorine compound, a content of the additional raw material being in a range from 0.05 parts by mass to 20 parts by mass with respect to 100 parts by mass of the aluminum raw material, and
conditions below are satisfied:

(1) a viscosity of a resin composition for viscosity measurement is 3,000 mPa·s or less as measured using an E-type viscometer at a measurement temperature of 25 degrees C using a cone rotor (3 degrees × R9.7) and at a rotation speed of 100 s$^{-1}$, the resin composition for viscosity measurement being obtained by: mixing 50 g of the thermally conductive particles and 50 g of an epoxy resin having an epoxy equivalent weight ranging from 200 g/eq to 1,000 g/eq; and kneading a mixture of the thermally conductive particles and the epoxy resin using a planetary centrifugal mixer at 1,000 rpm for one minute and 2,000 rpm for one minute, the epoxy resin having a viscosity ranging from 400 mPa·s to 900 mPa·s as measured using an E-type viscometer at a measurement temperature of 25 degrees C using a cone rotor (3 degrees × R9.7) and at a rotation speed of 100 s$^{-1}$;
(2) a wear rate of the thermally conductive particles is 4 kcps or less, which is calculated by a formula below based on X-ray fluorescence intensities (kcps) of iron elements before and after a wear test, the wear rate being obtained by: placing 500 parts by mass of SUS304 steel balls with a diameter of 5 mm and 100 parts by mass of the thermally conductive particles into a cylindrical container in a form of a 250 mL wide-mouth bottle; rotating the cylindrical container at 80 rpm for three hours with a center axis of a cylinder of the cylindrical container as a rotation axis; separating the steel balls and the thermally conductive particles using a sieve having an opening size of 1 mm to obtain the thermally conductive particles after the wear test; mixing 4 parts by mass of each of the thermally conductive particles before and after the wear test and 8 parts by mass of lithium borate to obtain mixtures; pulverizing each of the mixtures in a mortar for five minutes; and measuring an intensity (kcps) of an iron element in each of the pulverized mixtures using an X-ray fluorescence spectrometer, where wear rate = (X-ray fluorescence intensity of iron element after wear test) - (X-ray fluorescence intensity of iron element before wear test);

and
(3) a thermal conductivity of a test piece measured by a thermophysical property measurement by a hot-disk method is 0.80 W/m·K or more, the test piece being prepared by: kneading 30 parts of a mixture liquid, which is obtained by mixing an epoxy resin having an epoxy equivalent weight ranging from 200 g/eq to 1,000 g/eq and an amine curing agent having an amine value ranging from 100 mg KOH/g to 500 mg KOH/g at a ratio ranging from 3:1 to 4:1, and 70 parts of the thermally conductive particles to prepare a resin composition; mold-pressing the resin composition into a circular sheet molded product having a diameter of 100 mm or more and a thickness of 4 mm or more; heat-curing the circular sheet molded product at a set temperature of 120 degrees C for one hour; allowing the circular sheet molded product to be cooled; and cutting the circular sheet molded product into four equal sections to form a fan shape with a center angle of 90 degrees.

2. The thermally conductive particles according to claim 1, wherein the additional raw material other than the fluorine compound is at least one selected from the group consisting of oxide, oxoacid salt, hydroxide, carbonate, and basic carbonate.

3. The thermally conductive particles according to claim 1, wherein the thermally conductive particles are colored by containing at least one element selected from the group consisting of iron, cobalt, copper, manganese, nickel, and chromium.

4. A mixture obtained by mixing a thermally conductive filler with the thermally conductive particles according to any one of claims 1 to 3.

5. The mixture according to claim 4, wherein the thermally conductive filler is at least one selected from the group consisting of barium sulfate, talc, boron nitride, and magnesium oxide.

6. A production method of the thermally conductive particles according to any one of claims 1 to 3, the method comprising:

firing a raw material mixture containing an aluminum raw material, a zinc raw material, and an additional raw material other than the aluminum raw material and the zinc raw material, wherein
the aluminum raw material is at least one selected from the group consisting of boehmite, aluminum hydroxide, and alumina, and
the zinc raw material is at least one selected from the group consisting of zinc oxide and basic carbonate.

7. The production method of the thermally conductive particles according to claim 6, wherein the raw material mixture is fired at a temperature in a range from 1,000 degrees C to 1,600 degrees C.

8. An article comprising the thermally conductive particles according to any one of claims 1 to 3.

9. The article according to claim 8, wherein the article is any one of a gravure ink, a coating liquid, a resin composition, and an adhesive composition.

10. A resin composition usable for forming a thermally conductive resin composition, the resin composition comprising:

the mixture according to claim 4; and
a formation resin.

11. The resin composition according to claim 10, wherein a content of the mixture is in a range from 5 mass% to 95 mass% with respect to an entirety of the formation resin.

12. A thermally conductive thin film formed by applying the article according to claim 9.

13. The article according to claim 8, wherein the article is usable as a heat dissipation member for any one of an electronic device component, an electronic device housing, an EV motor, and a lithium battery.

## INTERNATIONAL SEARCH REPORT

| International application No. |
|---|
| **PCT/JP2023/042935** |

**A. CLASSIFICATION OF SUBJECT MATTER**

*C09K 5/14*(2006.01)i
FI:   C09K5/14 E

According to International Patent Classification (IPC) or to both national classification and IPC

**B. FIELDS SEARCHED**

Minimum documentation searched (classification system followed by classification symbols)

C09K5/00-5/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2018/159608 A1 (DAINICHISEIKA COLOR & CHEMICALS MFG. CO., LTD.) 07 September 2018 (2018-09-07) claims 1-18, example 60 | 1-13 |
| A | WO 2015/137468 A1 (DAINICHISEIKA COLOR & CHEMICALS MFG. CO., LTD.) 17 September 2015 (2015-09-17) claims 1-9 | 1-13 |
| A | JP 2003-100932 A (KYOCERA CORP.) 04 April 2003 (2003-04-04) claims 1-2 | 1-13 |
| A | WO 2022/176746 A1 (NATIONAL UNIVERSITY CORPORATION HOKKAIDO UNIVERSITY) 25 August 2022 (2022-08-25) claims 1-11 | 1-13 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/042935**

| Patent document cited in search report | | | Publication date (day/month/year) | Patent family member(s) | | | Publication date (day/month/year) |
|---|---|---|---|---|---|---|---|
| WO | 2018/159608 | A1 | 07 September 2018 | US | 2019/0359875 | A1 | |
| | | | | claims 1-18, example 60 | | | |
| | | | | JP | 2018-145025 | A | |
| | | | | EP | 3590891 | A1 | |
| | | | | CN | 110352178 | A | |
| | | | | KR | 10-2019-0116530 | A | |
| | | | | TW | 201836984 | A | |
| WO | 2015/137468 | A1 | 17 September 2015 | US | 2016/0369148 | A1 | |
| | | | | claims 1-9 | | | |
| | | | | JP | 2017-190456 | A | |
| | | | | EP | 3118160 | A1 | |
| | | | | KR | 10-2016-0134752 | A | |
| | | | | CN | 106103346 | A | |
| | | | | TW | 201540670 | A | |
| JP | 2003-100932 | A | 04 April 2003 | (Family: none) | | | |
| WO | 2022/176746 | A1 | 25 August 2022 | JP | 2022-127429 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009249226 A
- WO 20150137468 A1
- JP 7185798 B